Europäisches Patentamt

European Patent Office

Office européen des brevets

(19)

(11) Veröffentlichungsnummer : **0 288 097 B1**

(12)

# EUROPÄISCHE PATENTSCHRIFT

(45) Veröffentlichungstag der Patentschrift :
**11.03.92 Patentblatt 92/11**

(51) Int. Cl.$^5$ : **B62J 3/00, B62M 25/04**

(21) Anmeldenummer : **88200560.6**

(22) Anmeldetag : **25.03.88**

(54) **Befestigungskonstruktion zur loslöslichen Befestigung eines Zubehörteiles an einem Fahrradlenker.**

(30) Priorität : **26.03.87 NL 8700712**

(43) Veröffentlichungstag der Anmeldung :
**26.10.88 Patentblatt 88/43**

(45) Bekanntmachung des Hinweises auf die
Patenterteilung :
**11.03.92 Patentblatt 92/11**

(84) Benannte Vertragsstaaten :
**DE FR GB NL**

(56) Entgegenhaltungen :
**FR-A- 1 009 276**
**FR-A- 1 109 220**
**GB-A- 850 877**
**NL-A- 8 301 969**

(73) Patentinhaber : **Batavus B.V.**
**Industrieweg 4**
**NL-8444 AR Heerenveen (NL)**

(72) Erfinder : **Oskam, Willem**
**Rak 23**
**NL-8446 MZ Heerenveen (NL)**

(74) Vertreter : **Smulders, Theodorus A.H.J., Ir. et al**
**Vereenigde Octrooibureaux Nieuwe Parklaan**
**107**
**NL-2587 BP 's-Gravenhage (NL)**

## Beschreibung

Die Erfindung bezieht sich auf einen Tragarm zur loslöslichen Befestigung eines Zubehörteiles an einer Lenkstange wie der Lenkstange eines Zweiradfahrzeugs, versehen mit ersten Mitteln, über welche der Tragarm mit einem ersten Endteil desselben frei tragend gegen die Lenkstange befestigbar ist, und zweiten Mitteln, über welche ein Zubehörteil an dem Tragarm nahe dem anderen Endteil desselben befestigbar ist, wobei der erste Endteil versehen ist mit einer Schale, die eine um eine Achse und mit einem Krümmungsradius nach innen gekrümmte Oberfläche zur Abstützung gegen eine Lenkstange sowie eine durch diese Oberfläche reichende Öffnung aufweist.

Ein Tragarm wie beschrieben in dem Oberbegriff ist bekannt aus FR-A-1 109 220 und erstreckt sich zentral unter einer Fahrradklingel durch ein erstes Loch in der Lenkstange. Dieser Tragarm wird gebildet durch einen durch das Loch in der Schale reichenden Befestigungsbolzen. Im befestigten Zustand ist auf den unteren, durch das genannte Loch ragenden Teil der Tragarm eine Hülse mit einem Gewinde geschraubt. Diese Hülse ist durch ein zweites, mit dem ersten Loch fluchtendes, Loch gesteckt und durch dieses Loch bedienbar zum Festziehen der Schale gegen die Lenkstange. Die Schale befindet sich ebenfalls zentral unter der Fahrradklingel.

Die mit diesem bekannten Tragarm befestigte Fahrradklingel liegt zwangsläufig über der Lenkstange. Dies bringt eine zusätzliche Verletzungsgefahr bei Unfällen mit sich. Bei Fahrrädern besteht zudem Beschädigungsgefahr für die über der Lenkstange liegenden Zubehörteile, wenn das Fahrrad zu Reparaturzwecken kopfüber auf den Boden gestellt wird.

Zudem ist das Bohren zweier, genau gegenüber einander liegende Löcher in der Lenkstange umständlich und ist die lange, mit einem Gewinde versehene Hülse ein relativ teueres Spezialteil

Aus FR-A-1 009 276 ist ein Tragarm zur Befestigung eines Zubehörteiles in Höhe der Lenkstange bekannt. Bei dieser Konstruktion wird aber der Tragarm durch ein Klemmband an der Lenkstange gehalten. Diese Konstruktion ist sehr Störungsanfällig, ergibt keine genaue, sichere Positionierung des Zubehörteiles und bringt durch die scharfe, relativ weit unter der Lenkstange herausragende Klemmmittel (Ende vom Klemmband, Tragarmteil, Klemmschraube) ebenfalls eine Verletzungsgefahr mit sich.

Aus GB-A-850 877 ist ein Tragarm zur Befestigung eines Zubehörteiles an einer Lenkstange bekannt der ausgebildet ist als Fortsetzung von einem Klemmband der mit einem Bolzen um. die Lenkstange festgezogen werden kann. Der Tragarm ist gegenüber den Klemmband zurückgebogen.

Aus NL-A-8 301 969 ist ein Tragarm zur Befestigung eines Zubehörteiles an einer Lenkstange bekannt, der einteilig mit einem Klemmband ausgebildet ist.

Zubehörteile von Fahrrädern, Rollern, Mopeds usw., wie eine Fahrradklingel oder eine Verstellvorrichtung für eine Fahrradgangschaltung, werden gemäss der jetzigen Befestigungsweise mit Hilfe einer Klemmkonstruktion oben am Fahrradlenker montiert. In dieser Weise befestigt sind diese Lenkerarmaturen sehr reparaturanfällig und ausserdem nicht ungefährlich, weil sie bei einem Unfall Verwundungen verursachen können.

Es ist eine Aufgabe der Erfindung, eine Weise zur befestigung eines Zubehörteiles an einer Lenkstange zu beschaffen, die nicht die obengenannten Nachteile mit sich bringt.

Gemäß der Erfindung wird dazu, bei einem Tragarm nach dem Oberbegriff, die Schale als verbreiterter erster Endteil des Tragarms ausgebildet und der Tragarm so ausgebildet, daß dieser sich seitlich von der Schale und im Höhenbereich über der Schale eines von dem Krümmugsradius definierten Kreises zu den zweiten Mitteln erstreckt.

Durch diese Maßnahmen wird es ermöglicht ein Zubehörteil in Höhe der und neben der Lenkstange zu befestigen, ohne daß scharfe Teile von diesem Tragarm über oder unter die Lenkstange herausragen. Zudem bietet die Erfindung den Vorteil, daß ein durch das Loch in der Schale gestecktes Befestigungselement von außen erreichbar ist. Ein Loch in der Lenkstange reicht deshalb aus um das Befestigungselement zum Festziehen der Schale gegen der Lenkstange bedienen zu können.

Nach einer Ausarbeitung der Erfindung ist die Schale an ihrer konvexen Außenseite mit Mitteln versehen, durch welche eine Seilbetätigungsvorrichtung in erwünschter Weise positioniert gehalten werden kann. Dies macht es möglich, mit einem einzigen Befestigungsmittel wie z.B. ein Bolzen oder eine Schraube, das durch das Loch in der Schale gesteckt wird, den Tragarm, sowie eine Seilbetätigungsvorrichtung in sicherer und einfacher Weise an der Lenkstange zu befestigen.

Nach einer weiteren Ausarbeitung der Erfindung sind die ersten Mittel mit wenigstens einem Teil der Seilbetätigungs vorrichrung einteilig ausgebildet. Hierdurch werden Teile sowie deren Befestigung gegenübereinander eingespart.

Nach einer weitereren Verkörperung der Erfindung ist der Tragarm nach der Erfindung integriert in einer Fahrradklingel mit einer Klangschale, die an dem zweiten Endteil aufgehängt ist, und die mit einem Klöppelmechanismus versehen ist. Vorzugsweise ist dabei die Klangschale im Höhenbereich unter dem zweiten Endteil und über der Schale aufgehängt, während im Tragarm zwischen den beiden Endteilen ein Raum ausgebildet ist, in dem sich ein Teil von dem Klöppelmechanismus befindet und der den Klöppelmechanismus begrenzt.

Dadurch, daß der Klöppelbetätigungsmechanismus in dem Tragarm integriert ist werden weitere Teile eingespart und brauchen keine Teile in die Klangschale eingebaut zu werden.

Vorzugsweise ist der Klöppelmechanismus aus einer metallenen Spiralfeder und einem Klöppel zusammengesetzt, wobei die Spiralfeder mittels einer Klemmpassung mit dem Tragarm verbunden ist. Eine metalene Spiralfeder bietet gute und wenig temperaturabhängige Federungseigenschaften, während diese mittels einer Klemmpassung leicht einzubauen ist.

Nach einer weiteren Verkörperung der Erfindung ist der Tragarm nach der Erfindung integriert in einer Verstellvorrichtung. Nach der Erfindung ist dabei vorzugsweise der zweite Endteil des Tragarmes gleichfalls verbreitert ausgebildet zu einem flachen Kasten, dessen Boden im wesentlichen nach oben gewandt ist, welcher Kasten an seiner Unterseite mit einem Bodendeckel versehen ist und ein Gehäuse für einen darin angebrachten Verstellmechanismus bildet.

Wenn der Tragarm nach der Erfindung befestigt ist an einer Lenkstange mit an rückwärts gebogene Teile anschließenden Handgriffteilen, wobei der Tragarm im Bereich der Vorderseite eines Handgriffteils mit der Lenkstange verbunden ist und die Unterseite der Lenkstange eine Öffnung aufweist, die fluchtet mit der Öffnung in der Schale, liegt nach der Erfindung vorzugsweise die gekrümmte Oberfläche der Schale gegen die Unterseite der Lenkstange an, wobei der Tragarm sich im Höhenbereich benachbarter Teile der Lenkstange und im Innenbereich der rückwärts gebogenen Teile der Lenkstange von der Schale zu den zweiten Mitteln erstreckt. Hierdurch liegt das befestigte Zubehörteil besonders gut geschützt uni ist dennoch mit den Daumen sehr leicht zum Bedienen erreichbar.

Die Erfindung wird an Hand der Zeichnung näher erläutert, in der schematisch ein Ausführungsbeispiel der Befestigung einer Fahrradklingel und ein Ausführungsbeispiel der Befestigung einer Verstellvorrichtung für eine Gangschaltung wiedergegeben werden.

Es zeigen:

Figur 1 eine Draufsicht einer Fahrradklingel, die mittels eines Tragarmes gemäss der Erfindung in der linken Krümmung eines Lenkers montiert ist;

Figur 2 einen Schnitt gemäss der Linie II-II in Figur 1;

Figur 3 schematisch in Draufsicht eine Verstellvorrichtung, die mittels eines Tragarmes gemäss der Erfindung in der rechten Krümmung eines Lenkers montiert ist;

Figur 4 einen Schnitt gemäss der Linie IV-IV in Figur 3, und

Figur 5 in perspektivischer Ansicht einen Fahrradlenker, versehen mit einer Fahrradklingel und einer Verstellvorrichtung, die je in Kombination mit einem Seilbremshebel mittels eines Tragarmes gemäss der Erfindung an dem Lenker befestigt sind.

In den Figuren werden mit gleichen Bezugsziffern Organe mit analoger Funktion wiedergegeben.

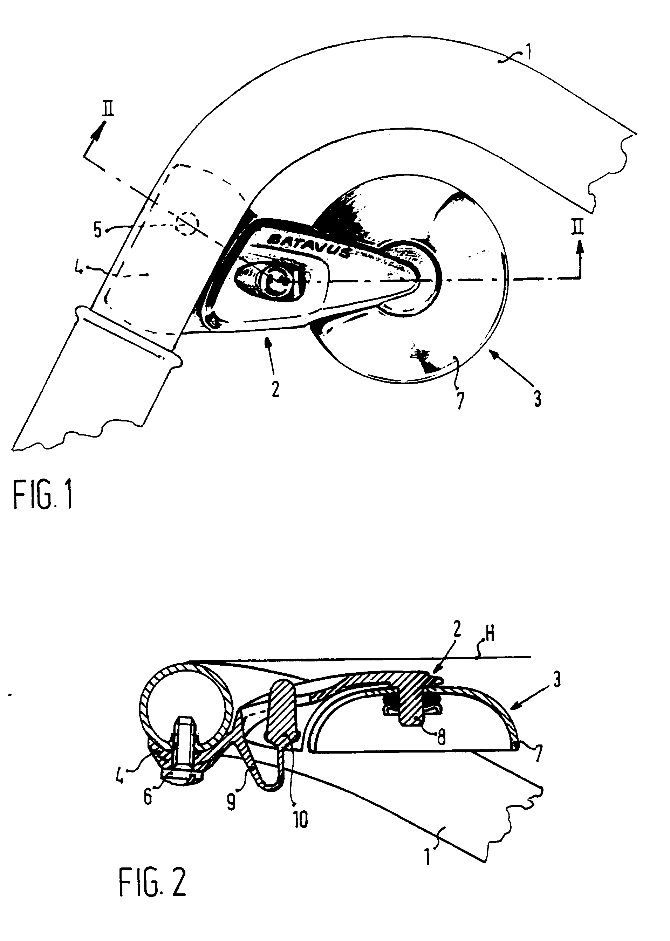

An dem wiedergegebenen Fahrradlenker 1 ist in der linkern Krümmung desselben eine Fahrradklingel 3 über einen Tragarm 2 befestigt (Figur 1 und Figur 2). Der Tragarm kann vorteilhafterweise aus Polyacetalharz hergestellt sein, aber auch andere Materialien sind anwendbar.

An dem Tragarm 2 ist an dem einen Ende eine gekrümmte Schale 4 ersichtlich, die eine Oeffnung 5 aufweist. Die Krümmung der Schale 4 ist derart, dass die Schale passend an der Aussenwandung des Fahrradlenkers 1 anliegt. Dabei wird die gewünschte Position der Schale 4 dadurch gefunden, dass man die Oeffnung 5 mit einer in dem Fahrradlenker angebrachten, z.B. mit Schraubengewinde versehenen Oeffnung in Flucht bringt, worauf durch einen einzigen Bolzen 6 die Schale 4 gegen den Lenker 1 befestigt werden kann und mit dieser der ganze Tragarm 2 und die daran angebrachte Fahrradklingel 3.

Die Fahrradklingel 3 umfasst eine Klangschale 7, die an einem sich am anderen Ende befindenden Stutzen 8 des Tragarmes 2 aufgehängt ist.

Zwischen den beiden Endbereichen (zwischen der Schale 4 und dem Gebiet mit dem Stutzen 8) ist der Tragarm derart gebildet, dass er gleichfalls als Raum und Begrenzung für den Klöppelmechanismus der Klingel dient. In dem in Figur 1 und Figur 2 gezeigten Beispiel ist der Klöppelmechanismus aus einer gebogenen Blattfeder 9 aus Polyacetalharz und einem am Ende der Blattfeder geformten Klöppel 10 aus Polyacetalharz gebildet. Der Klöppel und die Blattfeder sind vorzugsweise zusammen mit dem Tragarm einstückig durch Spritzgiessen hergestellt. Die Klingel wird dadurch betätigt, dass man mit einem Finger, z.B. dem Daumen, den Klöppel 10 seitwärts in Richtung des Fahrradlenkers 1 bewegt und danach loslässt. Unter Einfluss der Federspannung bewegt sich der Klöppel 10 dann zurück und schlägt gegen die Klangschale 7 unter Erzeugung eines einzigen hellen Schallschlages.

Die Linie H gibt die obene horizontale Ebene an, die normalerweise von den Handgriffen eines Fahrradlenkers bestimmt wird, wenn das Fahrrad sich in Gebrauchsstellung befindet. Figur 2 zeigt deutlich, dass die Oberseite des Tragarmes bzw. der Klingelkonstruktion nicht über die Ebene H hinauskommt.

Der Klöppelmechanismus kann auch aus einer metallenen Blattfeder oder einer Schraubfeder, versehen mit einem Klöppel, bestehen. Die Feder kann in geeigneter Weise, z.B. durch Klemmen, Schrauben, Nieten u.dgl. an dem Tragarm befestigt sein.

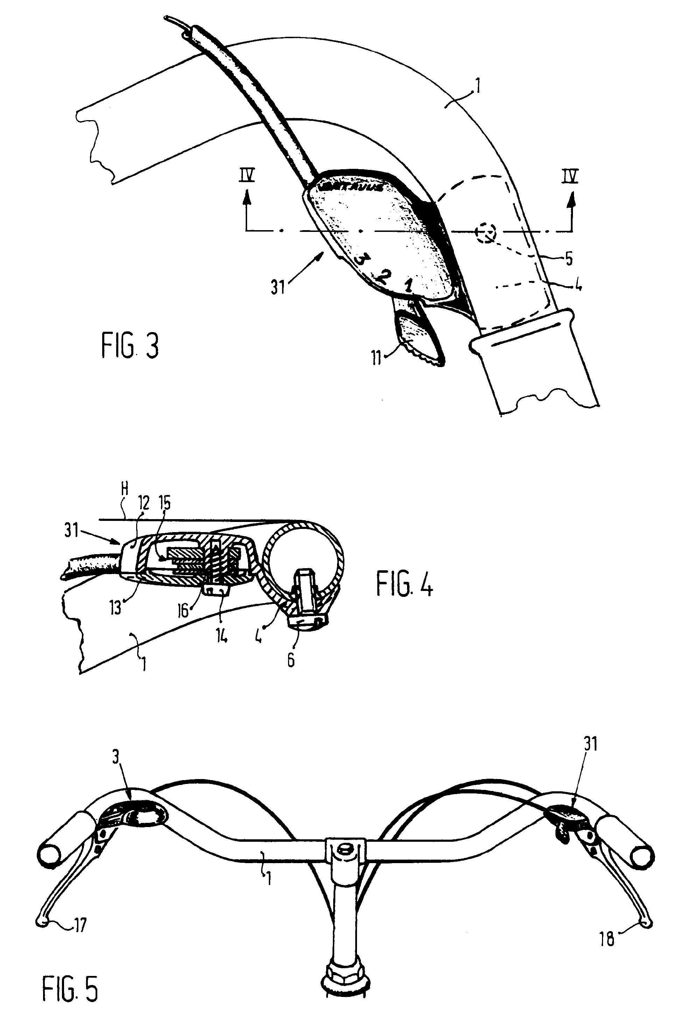

In Figur 3 und Figur 4 ist die Befestigung einer Verstellvorrichtung einer Fahrradgangschaltung mittels eines ähnlichen Tragarmes 31 aus Polyacetalharz an dem Fahrradlenker 1 in der rechten Krümmung desselben wiedergegeben.

Die Verstellvorrichtung ist an dem zu ihr gehörenden Hebel 11 erkennbar, dessen Position auf Wunsch durch eine Daumenbewegung in die verschiedenen Stellungen eingestellt werden kann.

Die Befestigung des Tragarmes 31 an der Unterseite des Fahrradlenkers 1 erfolgt analog mit der der Klingelkonstruktion in Figur 1 und Figur 2 über eine Schale 4, eine Oeffnung 5 und einen Bolzen 6.

Das andere Ende des Tragarmes 31 ist zu einem ungekehrten Kasten oder einer solchen Schale 12 geformt, in dem bzw. der die mit dem Hebel 11 zu betätigende Mechanik 15 angebracht ist. Der Kasten 12 ist mit einem Bodendeckel 13 abgeschlossen, der mittels einer Schraube 14 in einem Stutzen 16 befestigt ist. Der Stutzen 16 erstreckt sich ebenso wie der Stutzen 8 abwärts von dem betreffenden Ende des Tragarmes. Auch dabei ist ersichtlich (Figur 4) dass der Tragarm völlig unterhalb der Horizontalebene H liegt, während das Gehäuse für die Verstellvorrichtung ausserdem auch an der Unterseite davon nicht unter die Fahrradlenkstange hinauskommt und also in vertikalem Sinne optimal geschützt ist. Dies ist übrigens auch bei der in den Figuren 1 und 2 gezeigten Klingelkonstruktion der Fall.

Es ist bekannt, bei der Anwendung von Seilbremsen die Seilbremshebel an der Unterseite gegen die Fahrradlenkstange zu befestigen mittels eines einzigen Bolzens, der in einer Oeffnung in dem Fahrradlenkhebel angebracht wird. Dieser Bolzen kann vorteilhafterweise der Bolzen sein, mit dem der Tragarm gemäss der Erfindung befestigt wird, so dass eine integrierte Konstruktion, wie in Figur 5 wiedergegeben, erhalten wird. In Figur 5 sind mit 17 und 18 Seilbremshebel angegeben. Die Kombination der Klingelbefestigungskonstruktion mit dem Seilbremshebel 17 bzw. der Verstellvorrichtungbefestigungskonstruktion mit dem Seilbremshebel 18 können je mit Hilfe von nur einem einzigen Bolzen befestigt werden.

Selbstverständlich können an der Befestigungskonstruktion gemäss der Erfindung, wie oben beschrieben und in der Zeichnung wiedergegeben, Aenderungen angebracht werden, ohne den Rahmen der Erfindung zu übersteigen. Insbesondere kann die Form des freien Endbereichs des Tragarmes variiert werden, wodurch nicht nur eine Klingel oder eine Verstellvorrichtung, sondern erwünschtenfalls auch andere Zubehörteile, wie z.B. ein Kilometerzähler, in geschützter Weise befestigt werden können. Auch kann ein Tragarm gemäss der Erfindung zusammen mit wenigstens dem fest an dem Lenker zu befestigenden Teil eines Betätigungsorgans für ein Bremsseil, Kupplungsseil o.dgl. einstückig ausgebildet werden.

## Patentansprüche

1. Tragarm zur loslöslichen Befestigung eines Zubehörteiles (3, 31) an einer Lenkstange (1) wie der Lenkstange eines Zweiradfahrzeugs, versehen mit ersten Mitteln, über welche der Tragarm mit einem ersten Endteil desselben frei tragend gegen die Lenkstange (1) befestigbar ist, und zweiten Mitteln, über welche ein Zubehörteil (3, 31) an dem Tragarm (2) nahe dem anderen Endteil desselben befestigbar ist, wobei der erste Endteil versehen ist mit einer Schale (4), die eine um eine Achse ur-d mit einem Krümmungsradius nach innen gekrümmte Oberfläche zur Abstützung gegen eine Lenkstange (1) sowie eine durch diese Oberfläche reichende Öffnung (5) aufweist, **dadurch gekennzeichnet**, daß die Schale (4) als verbreiterter erster Endteil des Tragarms (2) ausgebildet ist, und daß der Tragarm (2) sich seitlich von der Schale (4) und im Höhenbereich über der Schale (4) eines von dem Krümmungsradius definierten Kreises zu den zweiten Mitteln erstreckt.

2. Tragarm nach Anspruch 1, **dadurch gekennzeichnet,** daß die Schale (4) an ihrer konvexen Außenseite mit Mitteln verseher ist, durch welche eine Seilbetätigungsvorrichtung (17, 18) in erwünschter Weise positioniert gehalten werden kann.

3. Tragarm nach Anspruch 2, **dadurch gekennzeichnet**, daß die ersten Mittel mit wenigstens einem Teil der Seilbetätigungsvorrichtung (17, 18) einteilig ausgebildet sind.

4. Fahrradklingel mit einem Tragarm nach Anspruch 1, mit einer Klangschale (7), die an dem zweiten Endteil aufgehängt ist, und mit einem Klöppelmechanismus (9, 10), **dadurch gekennzeichnet**, daß die Klangschale (7) im Höhenbereich unter dem zweiten Endteil und über der Schale (4) aufgehängt ist, während im Tragarm (2) zwischen den beiden Endteilen ein Raum ausgebildet ist, in dem sich ein Teil von dem Klöppelmechanismus (9, 10) befindet und der den Klöppelmechanismus (9, 10) begrenzt.

5. Fahrradklingel nach Anspruch 4, **dadurch gekennzeichnet**, daß der Klöppelmechanismus aus einer metallenen Spiralfeder und einem Klöppel zusammengesetzt ist, wobei die Spiralfeder mittels einer Klemmpassung mit dem Tragarm verbunden ist.

6. Verstellvorrichtung mit einem Tragarm nach Anspruch 1, **dadurch gekennzeichnet,** daß der zweite Endteil des Tragarmes (2) gleichfalls verbreitert ausgebildet ist zu einem flachen Kasten (12), dessen Boden im wesentlichen nach oben gewandt ist, welcher Kasten (12) an seiner Unterseite mit einem Bodendeckel (13) versehen ist und ein Gehäuse für einen darin angebrachten Verstellmechanismus (15) bildet.

7. Lenkstange mit einem Tragarm nach Anspruch 1 und mit an rückwärts gebogene Teile anschließenden Handgriffteilen, wobei der Tragarm (2) im Bereich der Vorderseite eines Handgriffteils mit der Lenkstange (1) verbunden ist und die Unterseite der Lenkstange (1) eine Öffnung aufweist, die fluchtet mit der Öffnung (5) in der Schale (4), **dadurch gekennzeichnet,** daß die gekrümmte Oberfläche der Schale (4) gegen die Unterseite der Lenkstange (1) anliegt und der Tragarm (2) sich im Höhenbereich benachbarter Teile der Lenkstange (1) und im Innenbereich der rückwärts gebogenen Teile der Lenkstange (1) von der Schale (4) zu den zweiten Mitteln erstreckt.

## Claims

1. Supporting arm for the releasable securing of an accessory (3, 31) on a handlebar (1) such as the handlebar of a two-wheeled vehicle, provided with first means by which the supporting arm is securable with a first end part thereof in cantilever manner to the handlebar (1), and second means whereby an accessory (3, 31) can be secured to the supporting arm (2) near the other end part thereof, the first end part being provided with a shell (4) which comprises a surface for bearing against a handlebar (1), which surface is curved inwards about an axis and with a radius of curvature, and also an aperture (5) which extends through this surface, characterised in that the shell (4) is constructed as a broadened first end part of the supporting arm (2), and that the supporting arm (2) extends laterally from the shell (4) and at a level above the shell (4), having its arc defined by the radius of curvature to the second means.

2. Supporting arm according to claim 1, characterised in that the shell (4) is provided at its convex outer side with means whereby a cable operating device (17, 18) can be held in a desired position.

3. Supporting arm according to claim 2, characterised in that the first means are made in one piece with at least one part of the cable operating device (17,18).

4. Bicycle bell with a supporting arm according to claim 1, with a sounding shell (7) which is suspended on the second end part, and with a bell striker mechanism (9, 10), characterised in that the sounding shell (7) is suspended at a level below the second end part and above the shell (4), whilst there is formed in the supporting arm (2) between the two end parts a space in which a part of the striker mechanism (9, 10) is situated and which bounds the striker mechanism (9, 10).

5. Bicycle bell according to claim 4, characterised in that the striker mechanism comprises a metallic coil spring and a striker, the coil spring being connected with a clamping fit to the supporting arm.

6. Adjusting mechanism with a supporting arm according to claim 1, characterised in that the second end part of the supporting arm (2) is likewise given a broadened form to constitute a shallow box (12) the bottom of which is directed substantially upwards, this box (12) being provided at its underside with a cover (13) and forming a housing for an adjusting mechanism (15) arranged therein.

7. Handlebar with a supporting arm according to claim 1 and with handle parts following rearwardly bent parts, the supporting arm (2) being connected to the handlebar (1) in the region of the front side of a handle part, and the underside of the handlebar (1) having an aperture which is in alignment with the aperture (5) in the shell (4), characterised in that the curved surface of the shell (4) abuts against the underside of the handlebar (1), and the supporting arm (2) extends at the level of neighbouring parts of the handlebar (1) and on the inner side of the rearwardly bent parts of the handlebar (1) from the shell (4) to the second means.

## Revendications

1. Bras porteur pour la fixation démontable d'un accessoire (3, 31) à un organe de direction (1) tel que le guidon d'un véhicule à deux roues, prévu avec un premier moyen à l'aide duquel le bras porteur peut être fixé en porte à faux contre le guidon (1) par une première de ses parties extrêmes, et un second moyen à l'aide duquel un accessoire (3, 31) peut être fixé sur le bras porteur (2) à proximité de son autre partie extrême, la première partie extrême étant prévue avec une coquille (4) qui présente un face supérieure incurvée intérieurement autour d'un axe et avec un rayon de courbure permettant un appui contre un guidon (1), ainsi qu'une ouverture (5) traversant cette surface, caractérisé en ce que la coquille (4) est conçue comme étant la première partie extrême élargie du bras porteur (2), et en ce que le bras porteur (2) s'étend jusqu'au second moyen latéralement à partie de la coquille (4) et au-dessus de la coquille 4) dans la région du niveau supérieur d'un cercle défini par le rayon de courbure.

2. Bras porteur selon la revendication 1, caractérisé en ce que la coquille (4) est prévue avec,sur son côté extérieur convexe, un moyen par lequel un dispositif d'actionnement de câble (17, 18) peut être tenu en position de la manière souhaitée.

3. Bras porteur selon la revendication 2, caractérisé en ce que le premier moyen est réalisé en une pièce avec au moins une partie du dispositif d'actionnement de câble (17, 18).

4. Sonnette de bicyclette avec un bras porteur selon la revendication 1, avec un timbre (7) qui est fixé sur la seconde partie extrême et avec un mécanisme à marteau (9, 10), caractérisée en ce que le timbre (7) est fixé dans le sens de la hauteur en dessous de la seconde partie extrême et au-dessus de la coquille (4), cependant qu'est ménagé dans le bras porteur (2), entre les deux parties extrêmes, un espace dans lequel se trouve une partie du mécanisme à marteau (9, 10) et qui délimite ce mécanisme à marteau (9, 10).

5. Sonnette de bicyclette selon la revendication 4, caractérisée en ce que le mécanisme à marteau est constitué par un ressort métallique en spirale et un marteau, le ressort en spirale étant réuni au bras porteur au moyen d'un ajustement serré.

6. Dispositif de réglage avec un bras porteur selon la revendication 1, caractérisé en ce que la seconde partie extrême du bras porteur (2) est elle aussi élargie en un boitier plat (12), dont la paroi de fond est essentiellement située vers le haut, qui est doté sur son coté inférieur d'un couvercle inférieur (13) et qui constitue un logement pour un mécanisme de réglage (15) qui y est installé.

7. Guidon avec un bras porteur selon la revendication 1 et avec des parties de poignées se raccordant à des parties courbées vers l'arrière, avec lequel le bras porteur (2) est réuni au guidon (1) dans la région de l'avant d'une partie de poignée et la face inférieure du guidon (1) présente une ouverture qui est alignée avec l'ouverture (5) pratiquée dans la coquille (4), caractérisé en ce que la face supérieure incurvée de la coquille (4) s'applique contre la face inférieure du guidon (1) et le bras porteur (2) s'étend de la coquille (4) jusqu'au second moyen à la hauteur des parties voisines du guidon (1) et à l'intérieur des parties courbées vers l'arrière du guidon (1).

FIG.1

FIG. 2

FIG. 3

FIG. 4

FIG. 5